# EUROPÄISCHE PATENTSCHRIFT

(11) **EP 4 200 539 B1**
(45) Veröffentlichungstag und Bekanntmachung des Hinweises auf die Patenterteilung: **29.01.2025**
(21) Anmeldenummer: 21749219.8
(22) Anmeldetag: 27.07.2021
(51) Int. Cl.: F16H 3/00

(54) **DOPPELKUPPLUNGSGETRIEBE**
DOUBLE CLUTCH TRANSMISSION
TRANSMISSION À DOUBLE EMBRAYAGE

(30) Priorität: 20.08.2020 DE 102020005103
(43) Veröffentlichungstag der Anmeldung: 28.06.2023
(73) Patentinhaber: Mercedes-Benz Group AG, 70372 Stuttgart (DE)
(72) Erfinder: GITT, Carsten, 70437 Stuttgart (DE); KOLB, Andreas, 73249 Wernau (DE); HAERTER, Tobias, 70174 Stuttgart (DE); SCHWEITZER, Juergen, 70794 Filderstadt (DE); ZEIBIG, Jonathan, 73630 73630 Remshalden (DE); HAHN, Peter, 70374 Stuttgart (DE); ROMANIAK, Jakub, 70186 Stuttgart (DE); SPERRFECHTER, Stefan, 73072 Donzdorf (DE); RIEDL, Klaus, 72074 Tübingen (DE); SCHILDER, Tobias, 70794 Filderstadt (DE)
(74) Vertreter: Novagraaf Group
(86) Internationale Anmeldenummer: PCT/EP2021/071003
(87) Internationale Veröffentlichungsnummer: WO 2022/037910

(56) Entgegenhaltungen:
- DE-A1- 102011 000 152
- DE-A1- 102012 001 948
- DE-A1- 102013 010 723
- DE-A1- 102018 220 721
- JP-A- 2009 156 305

## Beschreibung

Die Erfindung betrifft Doppelkupplungsgetriebe mit den Merkmalen im Oberbegriff des Anspruchs 1. Ferner betrifft die Erfindung ein Hybridgetriebe mit einem solchen Doppelkupplungsgetriebe, sowie ein Fahrzeugantriebssystem mit einem solchen Doppelkupplungsgetriebe oder Hybridgetriebe.

Doppelkupplungsgetriebe sind prinzipiell aus dem allgemeinen Stand der Technik bekannt, so zum Beispiel aus der DE 10 2018 222 009 A1. Bezüglich weiterer Details bilden hier die DE 10 2018 130 621 A1 und die DE 11 2009 000 016 B4 relevanten Stand der Technik. Der Aufbau ist dabei so, dass die Eingangswelle des Doppelkupplungsgetriebes mit zwei Teilgetriebeeingangswellen koppelbar ist, wobei jede der Teilgetriebeeingangswellen über eine Vorgelegewelle ein Abtriebsrad antreibt, über welches dann beispielsweise ein gemeinsames Differential angetrieben werden kann. Die einzelnen Vorgelegewellen tragen Losräder zur Wahl der jeweiligen Gangstufen, die beiden Abtriebsräder der Vorgelegewellen sind als Festräder ausgebildet, wobei eines der Abtriebsräder als größeres Abtriebsrad ausgebildet ist, welches einen größeren Durchmesser und/oder eine größere Zähnezahl aufweist als das andere kleinere Abtriebsrad.

Ferner zeigen die DE 10 2012 001 948 A1 sowie die DE 10 2011 000 152 A1 jeweils Doppelkupplungsgetriebe mit zwei Vorgelegewellen, wobei eine der Vorgelegewellen ein drehest mit ihr verbundenes Abtriebsrad aufweist und die andere der Vorgelegewellen ein schaltbares Abtriebsrad aufweist. Die als gattungsgemäß betrachtete DE 10 2011 000 152 A1 zeigt darüber hinaus ein auf einer Nabe des genannten schaltbaren Abtriebsrads angeordnetes schaltbares Losrad, das zur Bildung eines Rückwärtsgangs verwendet wird. In diesen beiden Fällen sind die Doppelkupplungsgetriebe für die Bildung einer hohen Zahl von Gangstufen (Übersetzungsstufen) entwickelt worden, was zu einem Aufbau mit großer axialer Ausdehnung führte.

Im Übrigen zeigt die DE 10 2013 010 723 A1 ein Doppelkupplungsgetriebe mit zwei Vorgelegewellen, wobei ebenfalls die eine Vorgelegewelle ein drehfest mit ihr verbundenes kleiners Abtriebsrad aufweist, und die andere Vorgelegewelle ein schaltbares größeres Abtriebsrad aufweist, wobei die Vorgelegewelle mit dem kleineren Abtriebsrad ein drehfest mit ihr verbundenes Parksperrenrad aufweist.

Zwei im Vergleich zu der DE 10 2012 001 948 A1 sowie der DE 10 2011 000 152 A1 verhältnismäßig kompakte Radsätze für Hybrid-Doppelkupplungsgetriebe sind aus der JP 2009 156305 A sowie der DE 10 2018 220 721 A1 bekannt.

Die Aufgabe der hier vorliegenden Erfindung besteht nun darin, den gattungsgemäßen Aufbau weiter zu verbessern und ihn kompakter und in der Anwendung flexibler zu machen.

Erfindungsgemäß wird diese Aufgabe durch ein Doppelkupplungsgetriebe mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen. Außerdem löst ein Hybridgetriebe mit den Merkmalen im Anspruch 6 die Aufgabe. Auch hier ergeben sich vorteilhafte Ausgestaltungen und Weiterbildungen aus den hiervon abhängigen Unteransprüchen. Letztlich löst auch ein Fahrzeugantriebssystem mit den Merkmalen im Anspruch 10 die Aufgabe.

Das Doppelkupplungsgetriebe, von dem hier ausgegangen wird, sieht also ein größeres erstes Abtriebsrad und ein kleineres zweites Abtriebsrad vor, wobei das größere Abtriebsrad einen größeren Durchmesser und/oder eine größere Zähnezahl als das andere Abtriebsrad aufweist. Die Vorwärtsganglosräder für die zweite, dritte und vierte Gangstufe sind dabei auf der Vorgelegewelle mit dem kleineren der Abtriebsräder angeordnet, sodass die zweite Gangstufe, die dritte Gangstufe und die vierte Gangstufe jeweils mit einem Abtrieb über das kleinere zweite Abtriebsrad erfolgen, die für den fünften und sechsten Gang auf der mit dem größeren ersten Abtriebsrad, sodass die fünfte Gangstufe und die sechste Gangstufe jeweils mit einem Abtrieb über das größere erste Abtriebsrad erfolgen. Beide Abtriebsräder kämmen dann in an sich bekannter Weise mit einer Abtriebswelle bzw. einem auf ihr befestigtem Zahnrad und/oder dem Zahnrad eines Differentials.

Damit lässt sich ein sehr einfacher und kompakter Aufbau realisieren, bei dem die Gangstufen in der oben genannten Reihenfolge eine abnehmende Übersetzung aufweisen.

Es wird ferner davon ausgegangen, dass eines der Abtriebsräder, nämlich das größere erste Abtriebsrad, als Losrad ausgebildet ist, welches über ein Schaltelement drehfest mit der zugehörigen Vorgelegewelle verbindbar ist. Das andere der Abtriebsräder ist in diesem Fall ein drehfest mit seiner Vorgelegewelle verbundenes Festrad. Ein Rückwärtsganglosrad ist dabei drehbar auf einer Nabe des größeren Abtriebsrads angeordnet.

Erfindungsgemäß ist vorgesehen, dass das Rückwärtsganglosrad mit dem ersten Vorwärtsganglosrad sowie nur mit diesem kämmt.

Unter einer drehfesten Verbindung im Sinne der hier vorliegenden Erfindung ist dabei eine Verbindung zweier drehbar gelagerter Bauteile zu verstehen, wobei diese Bauteile koaxial zueinander angeordnet sind und derart miteinander verbunden sind, dass sie sich mit der gleichen Winkelgeschwindigkeit drehen.

Das erfindungsgemäße Doppelkupplungsgetriebe hat dabei den Vorteil, dass es bei voller Funktionalität und Lebensdauer sehr kompakt baut und sich kostengünstig realisieren lässt.

Gemäß einer sehr günstigen Weiterbildung des erfindungsgemäßen Doppelkupplungsgetriebes kann es nun ferner vorgesehen sein, dass das größere Abtriebsrad auf der Vorgelegewelle mit dem vierten und fünften Vorwärtsganglosrad angeordnet ist, während das andere, kleinere der Abtriebsräder auf der anderen Vorgelegewelle mit dem ersten, dem zweiten und dem dritten Vorwärtsganglosrad angeordnet ist.

Eine weitere Ausgestaltung des erfindungsgemäßen Doppelkupplungsgetriebes sieht es vor, dass in axialer Richtung der zweiten Vorgelegewelle das erste Vorwärtsganglosrad auf das zweite Abtriebsrad folgt, das zweite Vorwärtsganglosrad auf das erste Vorwärtsganglosrad folgt und das dritte Vorwärtsganglosrad auf das zweite Vorwärtsganglosrad folgt.

Eine sehr günstige Ausgestaltung sieht es dabei vor, dass das genannte Schaltelement dazu vorgesehen ist, wahlweise das als Losrad ausgebildete größere Abtriebsrad mit seiner Vorgelegewelle oder das Rückwärtsganglosrad mit dem größeren Abtriebsrad, welches dann von seiner Vorgelegewelle entkoppelt ist, zu verbinden. Damit lässt sich also über ein Schaltelement zum Einlegen der zweiten Gangstufe und das genannte Schaltelement zur wahlweisen Kopplung des als Losrad ausgebildeten großen Abtriebsrads mit seiner Vorgelegewelle oder dem Rückwärtsganglosrad nutzen, um zumindest einen Rückwärtsgang in dem Doppelkupplungsgetriebe zu realisieren.

Gemäß einer weiteren sehr günstigen Ausgestaltung des erfindungsgemäßen Doppelkupplungsgetriebes kann es dabei vorgesehen sein, dass auf der Vorgelegewelle mit dem kleineren der Abtriebsräder ein Parksperrenrad angeordnet ist. Damit lässt sich das Doppelkupplungsgetriebe im abgestellten Zustand eines mit ihm ausgestatteten Fahrzeugs entsprechend sperren.

Neben der einfachen und kompakten Bauweise sowie der Möglichkeit einer hochflexiblen Ansteuerung des erfindungsgemäßen Doppelkupplungsgetriebes ist es nun so, dass dieses sich auch sehr gut für die Elektrifizierung eignet. Ein erfindungsgemäßes Hybridgetriebe mit einem solchen Doppelkupplungsgetriebe sieht es dementsprechend vor, dass eine elektrische Maschine vorgesehen ist. Ein Verbrennungsmotor kann über eine Trennkupplung mit der Eingangswelle des Doppelkupplungsgetriebes zumindest mittelbar verbunden werden. Unter einer mittelbaren Verbindung in diesem Zusammenhang ist dabei eine Verbindung zur verstehen, welche über weitere Elemente erfolgen kann. Typische Elemente zwischen der Kurbelwelle des Verbrennungsmotors und der Eingangswelle des Doppelkupplungsgetriebes wären hier beispielsweise Drehschwingungsdämpfer und/oder -tilger, also Elemente zur Tilgung oder Dämpfung von Torsionsschwingungen. Diese können in an sich bekannter Weise verschiedenartig ausgebildet sein, beispielsweise mit einem Fliehkraftpendel, einer Flexplatte oder ähnlichem.

Gemäß einer sehr vorteilhaften Ausgestaltung des erfindungsgemäßen Hybridgetriebes kann es dabei vorgesehen sein, dass die elektrische Maschine direkt oder über ein Getriebeelement mit der Eingangswelle des Doppelkupplungsgetriebes verbunden ist. Die elektrische Maschine könnte beispielsweise koaxial angeordnet sein und direkt auf die Eingangswelle des Doppelkupplungsgetriebes treiben, indem ihr Rotor einen Teil dieser Welle ausbildet. Alternativ dazu kann sie mit ihrer Rotationsachse auch parallel zur Eingangswelle des Doppelkupplungsgetriebes bzw. zur Kurbelwelle des Verbrennungsmotors angeordnet sein und beispielsweise über ein Getriebeelement, wie eine Zahnradpaarung, ein Riementrieb, eine Kette oder dergleichen auf die Eingangswelle wirken. Eine weitere Möglichkeit wäre auch eine Anordnung mit einer Achslage senkrecht, dann müsste als Getriebeelement ein Differential verwendet werden. Dies ist prinzipiell denkbar, in der Praxis ist jedoch die Anordnung mit parallelen Achsen oder die koaxiale Anordnung zu bevorzugen.

Gemäß einer weiteren Alternative des erfindungsgemäßen Hybridgetriebes kann es nun vorgesehen sein, dass die elektrische Maschine mit einer der Teilgetriebewellen drehfest verbunden ist. Die elektrische Maschine treibt dann also auf eine der Teilgetriebeeingangswellen des Doppelkupplungsgetriebes oder wird, wenn sie generatorisch betrieben wird, von eben dieser angetrieben.

Eine weitere Alternative ist die Verbindung der elektrischen Maschine mit einem Losrad auf einer der Vorgelegewellen. Dabei kann insbesondere eines der Vorwärtsganglosräder, beispielsweise das vierte Vorwärtsganglosrad, zur Verbindung mit der elektrischen Maschine verwendet werden, welche dann ihrerseits mit einem Festrad an der Rotorwelle mit dem entsprechenden Losrad kämmt, sodass sie über das Schaltelement dieses Vorwärtsganglosrades bei Bedarf sowohl für den motorischen Antrieb als auch dem generatorischen Betrieb bei der Rekuperation oder durch den Verbrennungsmotor eingesetzt werden kann.

Ferner ist ein Fahrzeugantriebssystem beansprucht. Dieses Fahrzeugantriebssystem für ein Fahrzeug mit einer ersten Fahrzeugachse, einer zweiten Fahrzeugachse und einem Doppelkupplungsgetriebe nach einem der Ansprüche 1 bis 9 oder wahlweise einem Hybridgetriebe nach einem der Ansprüche 10 bis 13 sieht einen mit dem Doppelkupplungsgetriebe gekoppelten oder koppelbaren Verbrennungsmotor vor, wobei dieser und das Doppelkupplungsgetriebe oder Hybridgetriebe dafür vorgesehen ist, bei Bedarf eine Antriebsverbindung mit einer ersten angetriebenen Fahrzeugachse eines Fahrzeugs auszubilden, wobei eine zweite angetriebene Fahrzeugachse des Fahrzeugs mit wenigstens einem Elektromotor rein elektrisch angetrieben ist.

Der Aufbau kann also sowohl mit dem reinen Doppelkupplungsgetriebe als auch mit dem dieses umfassenden Hybridgetriebe zum Antrieb der einen Fahrzeugachse ausgestaltet sein, während die andere Fahrzeugachse rein elektrisch angetrieben wird. Dies schafft nun zahlreiche Möglichkeiten wie beispielsweise den Antrieb beider Fahrzeugachsen, vorzugsweise der einen über den Verbrennungsmotor und der anderen rein elektrisch. Mit dem Aufbau des erfindungsgemäßen Fahrzeugantriebssystems können für das Fahrzeug jedoch auch andere Fahrstrategien realisiert werden. So kann beispielsweise über den Verbrennungsmotor in Kombination mit einem Hybridgetriebe in einer der oben beschriebenen Ausgestaltungen der Antrieb der elektrischen Maschine als Generator erfolgen, welche dann ihrerseits Strom erzeugt, um die wenigstens eine elektrische Maschine an der anderen Fahrzeugachse anzutreiben. Damit entsteht die Funktionalität eines seriellen Hybridantriebs mit einer, nämlich der zweiten Fahrzeugachse, welche entsprechend angetrieben wird. Ferner lassen sich Möglichkeiten umsetzen, welche den Betrieb eines parallelen Hybrids an der ersten Fahrzeugachse durch das Hybridgetriebe realisieren, während beispielsweise die zweite Fahrzeugachse ausschließlich zur Rekuperation genutzt wird, oder die dort angeordneten elektrischen Maschinen während des parallelen Hybridbetriebs völlig unberücksichtigt bleiben. Eine weitere Möglichkeit ergibt sich auch, wenn das Doppelkupplungsgetriebe ohne Elektrifizierung eingesetzt wird. Dann entsteht ein Antrieb der ersten Fahrzeugachse ausschließlich über den Verbrennungsmotor sowie die Möglichkeit parallel oder alternativ dazu das Fahrzeug über die zweite Fahrzeugachse rein elektromotorisch anzutreiben.

Weitere vorteilhafte Ausgestaltungen des erfindungsgemäßen Doppelkupplungsgetriebes, des erfindungsgemäßen Hybridgetriebes und/oder des Fahrzeugantriebssystems ergeben sich auch aus dem Ausführungsbeispiel, welches nachfolgend unter Bezugnahme auf die Figuren näher beschrieben wird.

Dabei zeigen:
- Fig. 1: ein erster möglicher Aufbau des Doppelkupplungsgetriebes gemäß der Erfindung in Form eines Radsatzplans;
- Fig. 2: ein alternativer Aufbau des Doppelkupplungsgetriebes gemäß der Erfindung in Form eines Radsatzplans; und
- Fig. 3: ein weiterer alternativer Aufbau des Doppelkupplungsgetriebes gemäß der Erfindung in Form eines Radsatzplans;
- Fig. 4: eine mögliche Variante zur Elektrifizierung des erfindungsgemäßen Doppelkupplungsgetriebes am Beispiel des Aufbaus aus Fig. 1;
- Fig. 5: eine weitere Variante der Elektrifizierung des Doppelkupplungsgetriebes, wiederum am Beispiel der Ausgestaltung gemäß Fig. 1; und
- Fig. 6: noch eine weitere alternative Möglichkeit zur Elektrifizierung des Doppelkupplungsgetriebes, wiederum am Beispiel der Ausgestaltung des Doppelkupplungsgetriebes gemäß Fig. 1.

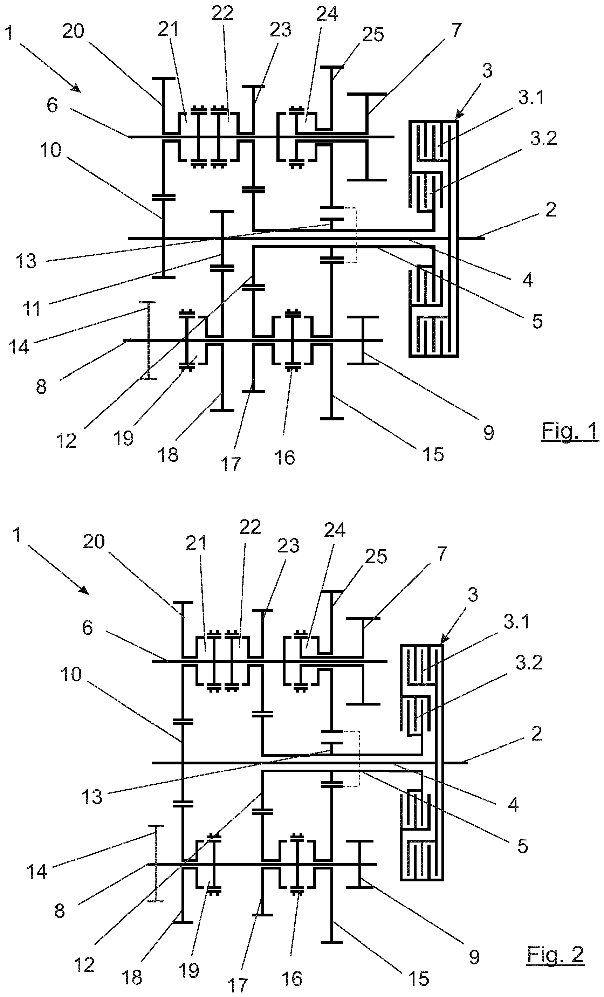

In der Darstellung der Figur 1 ist ein Doppelkupplungsgetriebe 1 in Form eines sogenannten Radsatzplans zu erkennen. Das Doppelkupplungsgetriebe 1 hat eine mit 2 bezeichnete Eingangswelle, welche beispielsweise mit einem Verbrennungsmotor, einer elektrischen Maschine und/oder anderen Antriebsaggregaten lösbar oder drehfest gekoppelt werden kann.

Auf die Eingangswelle 2 folgt in Leistungsflussrichtung eine Doppelkupplung 3, welche aus einer ersten Kupplung 3.1 und einer zweiten Kupplung 3.2 besteht. Über die erste Kupplung 3.1 kann eine erste Teilgetriebeeingangswelle 4 drehfest mit der Eingangswelle 2 verbunden werden, über die zweite Kupplung 3.2 kann eine koaxial hierzu angeordnete zweite Teilgetriebeeingangswelle 5 mit der Eingangswelle 2 des Doppelkupplungsgetriebes 1 verbunden werden. Typischerweise erfolgt die Verbindung der Teilgetriebeeingangswellen 4, 5 abwechselnd, sodass entweder über die eine oder die andere der Teilgetriebeeingangswellen 4, 5 der primäre Leistungsfluss verläuft. In dem hier dargestellten Ausführungsbeispiel ist die erste Teilgetriebeeingangswelle 4 als Vollwelle und die zweite koaxial dazu angeordnete Teilgetriebeeingangswelle 5 als Hohlwelle ausgeführt.

Das Doppelkupplungsgetriebe 1 weist ferner zwei Vorgelegewellen auf. Eine erste Vorgelegewelle 6 weist dabei ein koaxial zu ihr angeordnetes erstes Abtriebsrad 7 auf, eine zweite Vorgelegewelle 8 weist ein koaxial zu dieser angeordnetes zweites Abtriebsrad 9 auf. Die beiden Abtriebsräder 7, 9 treiben dann über ein hier nicht dargestelltes Zahnrad einer Ausgangswelle des Doppelkupplungsgetriebes 1 oder über ein Differential beispielsweise eine Fahrzeugachse eines mit dem Doppelkupplungsgetriebe 1 ausgerüsteten Fahrzeugs.

Die erste Teilgetriebeeingangswelle 4 trägt zwei koaxial auf ihr angeordnete Festräder 10, 11, die als Hohlwelle ausgebildete zweite Teilgetriebeeingangswelle 5 trägt ebenfalls zwei koaxial zu ihr angeordnete Festräder, welche hier mit 12 und 13 bezeichnet sind. Die zweite Vorgelegewelle 8 trägt außerdem ein Parksperrenrad 14, welches jedoch optional zu verstehen ist. Daneben sind auf der zweiten Vorgelegewelle 8 drei Vorwärtsganglosräder angeordnet. Ein erstes Vorwärtsganglosrad 15 folgt in axialer Richtung der zweiten Vorgelegewelle 8 auf das drehfest mit dieser verbundene zweite Abtriebsrad 9 und kämmt mit dem Festrad 13 auf der zweiten Teilgetriebeeingangswelle 5. In axialer Richtung der zweiten Vorgelegewelle 8 folgt dann ein Schaltelement 16, über welches das erste Vorwärtsganglosrad 15 drehfest mit der zweiten Vorgelegewelle 8 verbunden werden kann. In axialer Richtung der zweiten Vorgelegewelle 8 folgt dann ein weiteres Vorwärtsganglosrad 17, also das zweite Vorwärtsganglosrad. Das zweite Vorwärtsganglosrad 17 kämmt mit dem auf der zweiten Teilgetriebeeingangswelle 5 angeordneten Festrad 12 und ist ebenfalls durch das Schaltelement 16 drehfest mit der zweiten Vorgelegewelle 8 verbindbar. Das Schaltelement 16 kennt dafür also im Wesentlichen drei Schaltstellungen. In der Darstellung der Figur 1 ist sie in einer neutralen Schaltstellung dargestellt. Werden die Schaltelemente nach rechts ausgerückt, verbindet sie das erste Vorwärtsganglosrad 15 mit der zweiten Vorgelegewelle 8, werden sie nach links ausgerückt, verbindet das Schaltelement 16 das zweite Vorwärtsganglosrad 17 mit der zweiten Vorgelegewelle 8.

In Axialrichtung der zweiten Vorgelegewelle 8 parallel zu dem zweiten Vorwärtsganglosrad 17 folgt dann ein drittes Vorwärtsganglosrad 18, welches mit dem Festrad 11 der ersten Teilgetriebeeingangswelle 4 kämmt. Auch hier folgt in axialer Richtung benachbart ein Schaltelement 19, über welches das dritte Vorwärtsganglosrad 18 bei Bedarf drehfest mit der zweiten Vorgelegewelle 8 entsprechend verbunden werden kann. In axialer Richtung der Vorgelegewelle 8 nach links weitergehend ist dann das bereits erwähnte optionale Parksperrenrad 14 angeordnet.

Die erste Vorgelegewelle 6 wird nun in der Anordnung ihrer Räder und Schaltelemente von links nach rechts beschrieben. Es beginnt dabei mit einem vierten Vorwärtsganglosrad 20, welches mit dem Festrad 10 auf der ersten Teilgetriebeeingangswelle 4 entsprechend kämmt. Ein Schaltelement 21 erlaubt es, dass vierte Vorwärtsganglosrad 20 mit der ersten Vorgelegewelle 6 drehfest zu verbinden. In axialer Richtung der ersten Vorgelegewelle 6 von links nach rechts folgt dann ein weiteres Schaltelement 22 sowie ein fünftes Vorwärtsganglosrad 23. Dieses kämmt wiederum mit dem Festrad 12 auf der zweiten Teilgetriebeeingangswelle 5 und lässt sich über das Schaltelement 22 drehfest mit der ersten Vorgelegewelle 6 verbinden. In axialer Richtung rechts benachbart befindet sich dann ein Schaltelement 24 gefolgt von einem Rückwärtsganglosrad 25 und dem ersten Abtriebsrad 7, welches ebenfalls als Losrad auf der ersten Vorgelegewelle 6 ausgebildet ist. Das erste Abtriebsrad 7 ist dabei auf der Vorgelegewelle 6 gelagert und lässt sich über das Schaltelement 24 bei Bedarf drehfest mit dieser verbinden. Das Rückwärtsganglosrad 25 ist wiederum auf einer Nabe des ersten Abtriebsrads 7 gelagert und lässt sich über das Schaltelement 24 mit eben diesem verbinden. Das Schaltelement 24 kann also wahlweise entweder das erste Abtriebsrad 7 mit der ersten Vorgelegewelle 6 oder alternativ dazu das Rückwärtsganglosrad 25 mit dem ersten Abtriebsrad 7 verbinden, welches dann nicht mit der ersten Vorgelegewelle 6 verbunden ist. Wie alle bisher beschriebenen Schaltelemente 16, 19, 21, 22 und 24 weist auch dieses Schaltelement eine Neutralstellung auf, welche in der Darstellung der Figur 1 entsprechend gezeigt ist.

In der aufgeklappten Projektion des hier dargestellten Radsatzplans der Figur 1 nicht erkennbar und deshalb mit einer gestrichelten Linie angedeutet ist es so, dass das Rückwärtsganglosrad 25 mit dem ersten Vorwärtsganglosrad 15 kämmt und damit nur über dieses bei Bedarf angetrieben werden kann, da das Rückwärtsganglosrad 25 mit keinem anderen Zahnrad in dem Doppelkupplungsgetriebe 1 kämmt.

Neben der Tatsache, dass das erste Abtriebsrad 7 als Losrad auf der ersten Vorgelegewelle 6 ausgebildet ist, besteht eine weitere Besonderheit des Doppelkupplungsgetriebes 1 nun darin, dass das erste Abtriebsrad 7 größer als das zweite Abtriebsrad 9, welches als Festrad in herkömmlicher Art und Weise ausgebildet ist, ist. Größer bedeutet dabei, dass es einen größeren Durchmesser und damit auch eine größere Zähnezahl aufweist. Eine größere Zähnezahl alleine wäre im Prinzip auch ausreichend.

Der beschriebene Aufbau des Doppelkupplungsgetriebes 1 erlaubt es nun also, die einzelnen Gänge entsprechend zu schalten, wobei das erste Vorwärtsganglosrad 15 zur Realisierung des zweiten Gangs genutzt wird, das zweite Vorwärtsganglosrad 17 zur Realisierung des dritten Gangs und das dritte Vorwärtsganglosrad 18 zur Realisierung des vierten Gangs, welcher dann jeweils mit einem Abtrieb über das zweite Abtriebsrad 9 beispielsweise auf das hier nicht dargestellte Differential erfolgt. Der fünfte und sechste Gang wird dementsprechend durch das vierte Vorwärtsganglosrad 20 und das fünfte Vorwärtsganglosrad 23 realisiert, wozu dann der Abtrieb über das dann drehfest mit der ersten Vorgelegewelle 6 verkuppelte erste Abtriebsrad 7 mit dem größeren Durchmesser auf dasselbe Differential erfolgt. Zur Realisierung des Rückwärtsgangs wird das Rückwärtsganglosrad 25 mit dem ersten Abtriebsrad 7 entsprechend verschaltet und über das erste Vorwärtsganglosrad 15, also das Losrad für die zweite Gangstufe, angetrieben. Dabei lässt sich ein erster Rückwärtsgang über den beschriebenen Weg des Antriebs des ersten Vorwärtsganglosrads 15, welches dann drehfest mit der zweiten Vorgelegewelle 8 über das Schaltelement 16 verbunden wird, und den Antrieb des Rückwärtsganglosrades 25 sowie den Abtrieb über das mit ihm gekoppelten erste Abtriebsrad 7 realisieren. Ein zweiter Rückwärtsgang lässt sich realisieren, indem das vierte Vorwärtsganglosrad 20 und das fünfte Vorwärtsganglosrad 23, also die fünfte und die sechste Gangstufe, entsprechend mit einbezogen werden.

Der erste Vorwärtsgang wird in dem Doppelkupplungsgetriebe ebenfalls unter Einbeziehung dieser beiden Gangstufen realisiert, jedoch ohne eine Kopplung des Rückwärtsganglosrads 25, sondern dementsprechend mit einer Ankopplung des ersten Abtriebsrads 7 über das Schaltelement 24 mit der ersten Vorgelegewelle 6. Dies führt dann im Wesentlichen dazu, dass der Stufensprung zwischen der ersten und der zweiten Gangstufe dem zwischen der fünften und der sechsten Gangstufe entspricht.

In der Darstellung der Figur 2 ist ein alternativer Aufbau des Doppelkupplungsgetriebes 1 zu erkennen, wobei nachfolgend lediglich auf die Unterschiede gegenüber dem Aufbau in Figur 1 eingegangen wird. Der Unterschied liegt darin, dass hier nun das zweite Festrad 11 auf der ersten Teilgetriebeeingangswelle 4 eingespart wird. Das erste Festrad 10 kämmt daher nicht nur mit dem vierten Vorwärtsganglosrad 20 auf der ersten Vorgelegewelle 6, sondern auch mit dem dritten Vorwärtsganglosrad 18 auf der zweiten Vorgelegewelle 8, welches dafür in der Anordnung des dritten Vorwärtsganglosrads 18 und seines Schaltelements 19 gegenüber dem Aufbau in Figur 1 auf der zweiten Vorgelegewelle 8 entsprechend gespiegelt angeordnet ist. Ansonsten entspricht der Aufbau des Doppelkupplungsgetriebes 1 in der Darstellung der Figur 2 dem in der Figur 1 beschriebenen Aufbau.

Dies gilt auch für die Betriebsweise, sodass hier wiederum der Stufensprung vom ersten auf den zweiten Gang dem vom fünften auf den sechsten Gang entspricht. Außerdem entsprechen die Stufensprünge vom dritten auf den fünften Gang in etwa denen vom vierten auf den sechsten Gang, während der Stufensprung vom zweiten auf den dritten Gang bei den in Figur 2 gezeigten Aufbau nun frei wählbar wird.

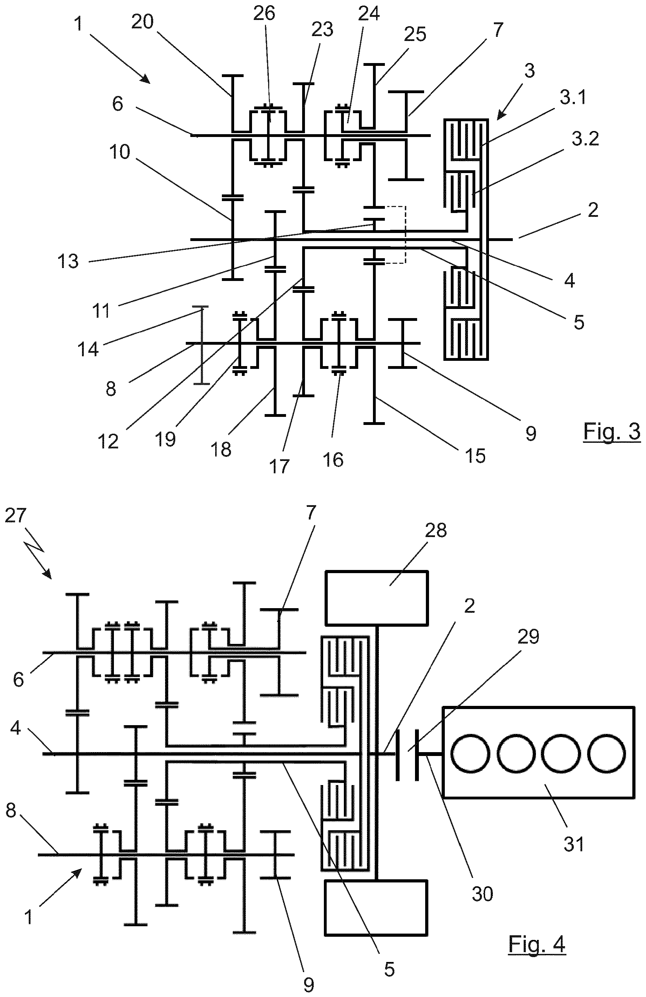

Eine weitere Variante des Doppelkupplungsgetriebes 1 ist in der Darstellung der Figur 3 zu erkennen. Die Ausgangsbasis hierfür ist ebenfalls wiederum die Darstellung des Doppelkupplungsgetriebes 1 aus Figur 1, sodass auch hier nachfolgend lediglich auf den Unterschied näher eingegangen wird. Dieser liegt nun darin, dass anstelle der beiden Schaltelemente 21 und 22 ein gemeinsames Mehrfachschaltelement 26 Verwendung findet. Das gemeinsame Mehrfachschaltelement 26 ist dabei so ausgebildet, dass es als Schaltelement mit einer Schiebemuffe realisiert ist. Somit kann ohne die Realisierung einer Neutralstellung wahlweise immer entweder das vierte Vorwärtsganglosrad 20 oder das fünfte Vorwärtsganglosrad 23 oder in der Mittelstellung der Schiebemuffe beide Vorwärtsganglosräder 20, 23 mit der ersten Vorgelegewelle 6 verschaltet sein. Das Mehrfachschaltelement 26 schalten dabei die Vorwärtsganglosräder 20, 23 für die fünfte und sechste Gangstufe. Alles andere und die Betriebsweise entsprechen dabei dem in Figur 1 beschriebenen. Selbstverständlich ließe sich nun dieser Aufbau mit dem einen Schaltelement 26 anstelle des Schaltelemente 21 und 22 auch wiederum mit dem in Figur 2 gezeigten Aufbau, bei welchem das Festrad 10 sowohl mit dem vierten Vorwärtsganglosrad 20 als auch dem dritten Vorwärtsganglosrad 18 kämmt, entsprechend umsetzen.

Das Doppelkupplungsgetriebe 1 in jeder beliebigen dieser Ausführungsvarianten eignet sich nun insbesondere auch für eine Elektrifizierung. In der Darstellung der Figur 4 ist dementsprechend ein Hybridgetriebe 27 gezeigt, dessen Kern das Doppelkupplungsgetriebe 1, hier in der Ausgestaltungvariante gemäß Figur 1, jedoch ohne das optionale Parksperrenrad 14, zeigt. Auch die anderen Ausgestaltungen gemäß der Figuren 2 und 3 oder einer Kombination dieser Ausgestaltungen sowie der Einsatz des Parksperrenrads 14 wären hier selbstverständlich möglich. Der entscheidende Unterschied liegt nun darin, dass eine elektrische Maschine 28 das Doppelkupplungsgetriebe 1 zu dem Hybridgetriebe 27 ergänzt, welche in dem hier dargestellten Ausführungsbeispiel koaxial zu der Doppelkupplung 3 und damit der Eingangswelle 2 des Doppelkupplungsgetriebes 1 angeordnet ist. Die elektrische Maschine 28 ist vorzugsweise direkt mit der Eingangswelle 2 verbunden. Die Eingangswelle 2 ist außerdem über eine Trennkupplung 29 mit einer Kurbelwelle 30 eines Verbrennungsmotors 31 verbunden. Diese Verbindung wird typischerweise mittelbar realisiert, das heißt, dass Elemente zur Tilgung und Dämpfung von Drehschwingungen im Bereich der Verbindung oder im Bereich zwischen der Kurbelwelle 30 und der Eingangswelle 2 des Doppelkupplungsgetriebes 1 vorgesehen sind. Dies ist jedoch fachmännisches Wissen, sodass auf derartige Elemente weder im Detail eingegangen wird, noch das derartige Elemente in der Darstellung der Figur entsprechend berücksichtigt wurden.

Bei geöffneter Kupplung 29 lässt sich der Aufbau nun rein elektrisch betreiben, indem über die elektrische Maschine 28 das Doppelkupplungsgetriebe 1 angetrieben und dessen Abtriebsräder 7 und 9, je nach Schaltstellung der Schaltelemente, betrieben werden. Bei geschlossener Kupplung 29 lassen sich der Verbrennungsmotor 31 und die elektrische Maschine 28 in ihrer Leistung koppeln oder die elektrische Maschine 28 kann ohne Last umlaufen oder auch durch den Verbrennungsmotor 31 generatorisch angetrieben werden.

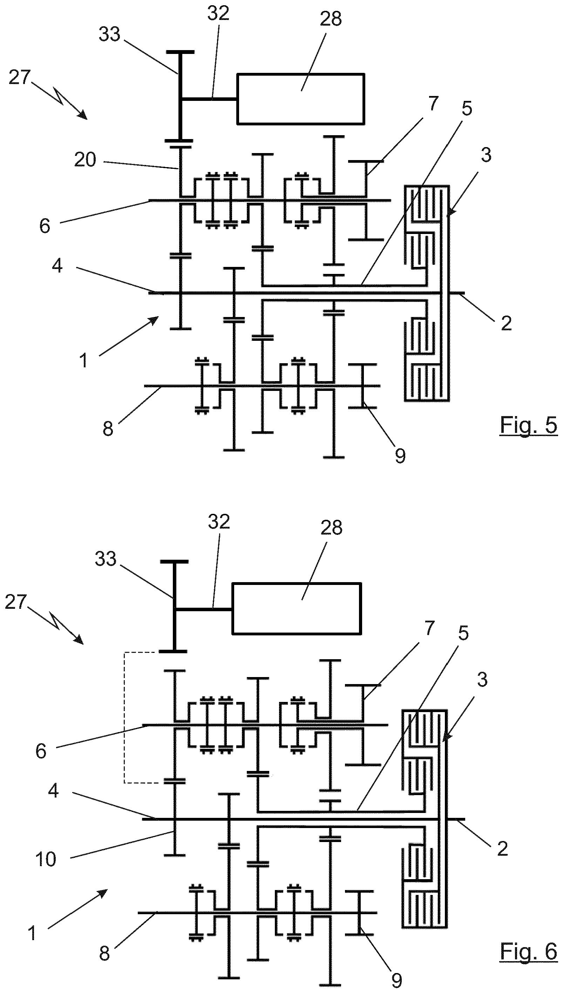

Weitere Möglichkeiten zur Einbindung der elektrischen Maschine 28 sind in den Darstellungen der Figuren 5 und 6 zu erkennen. Hier wurde auf die Darstellung des

Verbrennungsmotors 31 sowie der, je nach Antriebsstrang gegebenenfalls auch optionalen Trennkupplung 29, verzichtet. Der Aufbau des Doppelkupplungsgetriebes 1 innerhalb des jeweiligen Hybridgetriebes 27 entspricht wieder dem in Figur 1 gezeigten Aufbau, wobei dies rein beispielhaft zu verstehen ist und auch die Aufbauten aus den Figuren 2 und 3 oder eine Kombination hiervon zum Einsatz kommen könnte.

Die elektrische Maschine 28 ist nun in beiden Ausführungsbeispielen der Figuren 5 und 6 jeweils achsparallel zur Achse der Eingangswelle 2 bzw. der Teilgetriebeeingangswellen 4, 5 angeordnet. Im Ausführungsbeispiel der Figur 5 ist eine Rotorwelle 32 der elektrischen Maschine 28 mit einem Zahnrad 33 gekoppelt, welches mit dem vierten Vorwärtsganglosrad 20 entsprechend kämmt und somit einen Kraftfluss von der elektrischen Maschine 28 in das Doppelkupplungsgetriebe 1 oder von diesem in die elektrische Maschine 28, welche dann generatorisch betrieben wird, ermöglicht. Kann auf die Möglichkeit des Schaltens der Triebverbindung, welche sich hier auf das Schaltelement 21 ergibt, verzichtet werden, dann kann auch der in Figur 6 dargestellte ansonsten analoge Aufbau Verwendung finden, bei welchem das Zahnrad 33, wie es wiederum durch die gestrichelte Linie angedeutet ist, direkt mit dem ersten Festrad 10 auf der ersten Teilgetriebeeingangswelle 4 kämmt.

Das Doppelkupplungsgetriebe 1 oder auch das dieses umfassende Hybridgetriebe 27 können nun mit dem Verbrennungsmotor 31 und/oder der elektrischen Maschine 28 ein Fahrzeugantriebssystem ausbilden, um eine hier nicht dargestelltes Fahrzeug anzutreiben. Die hier nicht dargestellten Fahrzeugachsen des Fahrzeugs werden dabei bevorzugt unterschiedlich angetrieben. Eine erste Fahrzeugachse ist beispielsweise über das bereits mehrfach erwähnte aber hier nicht dargestellte Differential mit dem ersten Abtriebsrad 7 und dem zweiten Abtriebsrad 9 gekoppelt. Diese erste Fahrzeugachse kann also über das Doppelkupplungsgetriebe 1 und beispielsweise einen mit ihm gekoppelten oder mit ihm koppelbaren Verbrennungsmotor 31 und/oder die elektrischen Maschine 28 angetrieben werden. Die zweite Fahrzeugachse wäre in diesem Fall rein elektrisch angetrieben. Damit kann ein Antrieb nur über den Verbrennungsmotor oder eine paralleler Hybridabtrieb über die erste Fahrzeugachse realisiert werden. Über die zweite Fahrzugachse kann rein elektrisch gefahren werden.

Beim Einsatz eines Hybridgetriebes 27, insbesondere in der Variante der Figuren 5 oder 6,. ließe sich so auch die Funktionalität eines seriellen Hybridantriebs realisieren. Der Verbrennungsmotor 31 würde dann über das Doppelkupplungsgetriebe 1 die elektrische Maschine 28 antreiben. Die elektrische Maschine 28 würde dann die im generatorischen Betrieb erzeugte elektrische Leistung dem hier nicht dargestellten Elektromotor der zweiten Fahrzeugachse des Fahrzeugs zur Verfügung stellen, sodass dieses über die zweite Fahrzeugachse rein elektrisch in der Funktionalität eines seriellen Hybrides angetrieben werden kann.

## Patentansprüche

1. Doppelkupplungsgetriebe (1) mit
einer Eingangswelle (2);
zwei Kupplungen (3.1, 3.2) zum drehfesten Verbinden der Eingangswelle (2) mit jeweils einer Teilgetriebeeingangswelle (4, 5);
zwei Vorgelegewellen (6, 8) mit jeweils einem koaxial zu diesen angeordneten Abtriebsrad (7, 9);
einem ersten, zweiten und dritten Vorwärtsganglosrad (15, 17, 18), welche jeweils koaxial zu der einen der Vorgelegewellen (6, 8) angeordnet sind;
einem vierten und fünften Vorwärtsganglosrad (20, 23), welche jeweils koaxial zu der anderen der Vorgelegewellen (8, 6) angeordnet sind;
wobei
ein erstes Abtriebsrad (7) der Abtriebsräder (7, 9) als größeres Abtriebsrad ausgebildet ist, welches einen größeren Durchmesser und/oder eine größere Zähnezahl aufweist als ein kleineres zweites Abtriebsrad (9) der Abtriebsräder (7, 9),
das erste Vorwärtsganglosrad (15) zur Bildung einer zweiten Gangstufe verwendet wird, das zweite Vorwärtsganglosrad (17) zur Bildung einer dritten Gangstufe verwendet wird, das dritte Vorwärtsganglosrad (18) zur Bildung einer vierten Gangstufe verwendet wird, das vierte Vorwärtsganglosrad (20) zur Bildung einer fünften Gangstufe verwendet wird und das fünfte Vorwärtsganglosrad (23) zur Bildung einer sechsten Gangstufe verwendet wird, wobei die Gangstufen in der genannten Reihenfolge eine abnehmende Übersetzung aufweisen,
wobei das größere erste Abtriebsrad (7) als ein Losrad ausgebildet ist, welches über ein Schaltelement (24) drehfest mit der zugehörigen Vorgelegewelle (6) verbindbar ist, wobei das kleinere zweite Abtriebsrad (9) als ein drehfest mit seiner Vorgelegewelle (8) verbundenes Festrad ausgebildet ist,
wobei die zweite Gangstufe, die dritte Gangstufe und die vierte Gangstufe jeweils mit einem Abtrieb über das kleinere zweite Abtriebsrad (9) erfolgen und die fünfte Gangstufe und die sechste Gangstufe jeweils mit einem Abtrieb über das größere erste Abtriebsrad (7) erfolgen,
wobei ein Rückwärtsganglosrad (25) auf der Vorgelegewelle (6) mit dem größeren Abtriebsrad (7) sowie drehbar auf einer Nabe des größeren Abtriebsrads (7) angeordnet ist,
**dadurch gekennzeichnet, dass**
das Rückwärtsganglosrad (25) nur mit dem ersten Vorwärtsganglosrad (15) kämmt.

2. Doppelkupplungsgetriebe (1) nach Anspruch 1,
**dadurch gekennzeichnet, dass**
das größere Abtriebsrad (7) auf der Vorgelegewelle (6) mit dem vierten und fünften Vorwärtsganglosrad (20, 23) angeordnet ist, und das kleinere Abtriebsrad (9) auf der Vorgelegewelle (8) mit dem ersten, zweiten und dritten Vorwärtsganglosrad (15, 17, 18) angeordnet ist.

3. Doppelkupplungsgetriebe (1) nach Anspruch 2,
**dadurch gekennzeichnet, dass**
in axialer Richtung der zweiten Vorgelegewelle (8) das erste Vorwärtsganglosrad (15) auf das zweite Abtriebsrad (9) folgt, das zweite Vorwärtsganglosrad (17) auf das erste Vorwärtsganglosrad (15) folgt und das dritte Vorwärtsganglosrad (18) auf das zweite Vorwärtsganglosrad (17) folgt.

4. Doppelkupplungsgetriebe (1) nach Anspruch 1,
**dadurch gekennzeichnet, dass**
das Schaltelement (24) dazu vorgesehen ist, wahlweise das größere Abtriebsrad (7) mit seiner Vorgelegewelle (6) oder das Rückwärtsganglosrad (25) mit dem größeren Abtriebsrad (7), welches dann von seiner Vorgelegewelle (6) entkoppelt ist, zu verbinden.

5. Doppelkupplungsgetriebe (1) nach einem der Ansprüche 1 bis 4,
**dadurch gekennzeichnet, dass**
auf der Vorgelegewelle (8) mit dem kleineren Abtriebsrad (9) ein Parksperrenrad (14) angeordnet ist.

6. Hybridgetriebe (27) mit einem Doppelkupplungsgetriebe nach einem der Ansprüche 1 bis 5 und einer elektrischen Maschine (28).

7. Hybridgetriebe (27) nach Anspruch 6,
**dadurch gekennzeichnet, dass**
die elektrische Maschine (28) direkt oder über wenigstens ein Getriebeelement mit der Eingangswelle (2) des Doppelkupplungsgetriebes (1) gekoppelt oder koppelbar ist.

8. Hybridgetriebe (27) nach Anspruch 6,
**dadurch gekennzeichnet, dass**
die elektrische Maschine (28) mit einem Losrad (7, 15, 17, 18, 20, 23, 25) auf einer der Vorgelegewellen (6, 8) gekoppelt ist.

9. Hybridgetriebe (27) nach Anspruch 6,
**dadurch gekennzeichnet, dass**
die elektrische Maschine (28) mit einer der Teilgetriebeeingangswellen (4, 5) gekoppelt oder koppelbar ist.

10. Fahrzeugantriebssystem mit einem Verbrennungsmotor (32) und zwei angetriebenen Fahrzeugachsen, wobei eine erste Fahrzeugachse von dem Verbrennungsmotor (32) über ein Doppelkupplungsgetriebe (1) nach einem der Ansprüche 1 bis 5 oder ein Hybridgetriebe (27) nach einem der Ansprüche 6 bis 9 angetrieben wird, wobei die zweite Fahrzeugachse als eine rein elektrisch antreibbare Fahrzeugachse ausgebildet ist.

## Claims

1. Dual clutch transmission (1) with
an input shaft (2);
two couplings (3.1, 3.2) for the rotationally fixed connection of the input shaft (2) with one partial transmission input shaft (4, 5) each;
two countershafts (6, 8), each with an output gear (7, 9) arranged coaxially thereto;
first, second, and third forward gear idlers (15, 17, 18), each arranged coaxially to one of the countershafts (6, 8);
fourth and fifth forward gear idlers (20, 23), each arranged coaxially to the other of the countershafts (8, 6);
wherein
a first output gear (7) of the output gears (7, 9) is designed as a larger output gear which has a larger diameter and/or a greater number of teeth than a smaller second output gear (9) of the output gears (7, 9),
the first forward gear idler (15) is used to form a second gear stage, the second forward gear idler (17) is used to form a third gear stage, the third forward gear idler (18) is used to form a fourth gear stage, the fourth forward gear idler (20) is used to form a fifth gear stage, and the fifth forward gear idler (23) is used to form a sixth gear stage, wherein the gear stages in the order mentioned have a decreasing ratio,
wherein the larger first output gear (7) is designed as an idler which can be connected in a rotationally fixed manner to the associated countershaft (6) via a switching element (24), wherein the smaller second output gear (9) is designed as a fixed gear which is rotationally fixedly connected to its countershaft (8),
wherein the second gear stage, the third gear stage, and the fourth gear stage each take place with an output via the smaller second output gear (9), and the fifth gear stage and the sixth gear stage each take place with an output via the larger first output gear (7),
wherein a reverse gear idler (25) is arranged on the countershaft (6) with the larger output gear (7) and rotatably on a hub of the larger output gear (7),
**characterized in that**
the reverse gear idler (25) meshes only with the first forward gear idler (15).

2. Dual clutch transmission (1) according to claim 1,
**characterized in that**
the larger output gear (7) is arranged on the countershaft (6) with the fourth and fifth forward gear idlers (20, 23), and the smaller output gear (9) is arranged on the countershaft (8) with the first, second, and third forward gear idlers (15, 17, 18).

3. Dual clutch transmission (1) according to claim 2,
**characterized in that,**
in the axial direction of the second countershaft (8), the first forward gear idler (15) follows the second output gear (9), the second forward gear idler (17) follows the first forward gear idler (15), and the third forward gear idler (18) follows the second forward gear idler (17).

4. Dual clutch transmission (1) according to claim 1,
**characterized in that**
the switching element (24) is provided to selectively connect the larger output gear (7) to its countershaft (6) or the reverse gear idler (25) to the larger output gear (7), which is then decoupled from its countershaft (6).

5. Dual clutch transmission (1) according to any of claims 1 to 4,
**characterized in that**
a parking lock gear (14) is arranged on the countershaft (8) with the smaller output gear (9).

6. Hybrid transmission (27) with a dual clutch transmission according to any of claims 1 to 5 and an electric machine (28).

7. Hybrid transmission (27) according to claim 6,
**characterized in that**
the electric machine (28) is or can be coupled directly or via at least one transmission element to the input shaft (2) of the dual clutch transmission (1).

8. Hybrid transmission (27) according to claim 6,
**characterized in that**
the electric machine (28) is coupled to an idler (7, 15, 17, 18, 20, 23, 25) on one of the countershafts (6, 8).

9. Hybrid transmission (27) according to claim 6,
**characterized in that**
the electric machine (28) is coupled or can be coupled to one of the partial transmission input shafts (4, 5).

10. Vehicle drive system with an internal combustion engine (32) and two driven vehicle axles, wherein a first vehicle axle is driven by the internal combustion engine (32) via a dual clutch transmission (1) according to any of claims 1 to 5 or a hybrid transmission (27) according to any of claims 6 to 9, wherein the second vehicle axle is designed as a purely electrically driven vehicle axle.

## Revendications

1. Boîte de vitesses à double embrayage (1) comportant
un arbre d'entrée (2) ;
deux embrayages (3.1, 3.2) permettant de relier de manière solidaire en rotation l'arbre d'entrée (2) à respectivement un arbre d'entrée de boîte de vitesses partielle (4, 5) ;
deux arbres intermédiaires (6, 8) comportant respectivement un pignon mené (7, 9) disposé de manière coaxiale par rapport à ceux-ci ;
un premier, un deuxième et un troisième pignon fou de marche avant (15, 17, 18), lesquels sont respectivement disposés de manière coaxiale par rapport à l'un des arbres intermédiaires (6, 8) ;
un quatrième et un cinquième pignon fou de marche avant (20, 23), lesquels sont respectivement disposés de manière coaxiale par rapport à l'autre des arbres intermédiaires (8, 6) ;
dans laquelle
un premier pignon mené (7) parmi les pignons menés (7, 9) est conçu en tant que pignon mené plus grand qui présente un diamètre plus grand et/ou un nombre de dents plus grand que ceux d'un second pignon mené plus petit (9) parmi les pignons menés (7, 9),
le premier pignon fou de marche avant (15) est utilisé pour former un deuxième rapport de vitesse, le deuxième pignon fou de marche avant (17) est utilisé pour former un troisième rapport de vitesse, le troisième pignon fou de marche avant (18) est utilisé pour former un quatrième rapport de vitesse, le quatrième pignon fou de marche avant (20) est utilisé pour former un cinquième rapport de vitesse, et le cinquième pignon fou de marche avant (23) est utilisé pour former un sixième rapport de vitesse, dans laquelle les rapports de vitesse présentent un rapport de transmission décroissant dans l'ordre mentionné,
dans laquelle le première pignon mené plus grand (7) est conçu en tant que pignon fou qui peut être relié de manière solidaire en rotation à l'arbre intermédiaire (6) associé par l'intermédiaire d'un élément de commutation (24), dans laquelle le second pignon mené plus petit (9) est conçu en tant que pignon fixe relié de manière solidaire en rotation à son arbre intermédiaire (8),
dans laquelle le deuxième rapport de vitesse, le troisième rapport de vitesse et le quatrième rapport de vitesse sont effectués respectivement avec une sortie par l'intermédiaire du second pignon mené plus petit (9) et le cinquième rapport de vitesse et le sixième rapport de vitesse sont effectués respectivement avec une sortie par l'intermédiaire du premier pignon mené plus grand (7),
dans laquelle un pignon fou de marche arrière (25) est disposé sur l'arbre intermédiaire (6) avec le pignon mené plus grand (7) et de manière à pouvoir tourner sur un moyeu du pignon mené plus grand (7),
**caractérisée en ce que**
le pignon fou de marche arrière (25) s'engrène uniquement avec le premier pignon fou de marche avant (15).

2. Boîte de vitesses à double embrayage (1) selon la revendication 1,
**caractérisée en ce que**
le pignon mené plus grand (7) est disposé sur l'arbre intermédiaire (6) avec les quatrième et cinquième pignons fous de marche avant (20, 23), et le pignon mené plus petit (9) est disposé sur l'arbre intermédiaire (8) avec les premier, deuxième et troisième pignons fous de marche avant (15, 17, 18).

3. Boîte de vitesses à double embrayage (1) selon la revendication 2,
**caractérisée en ce que**
dans la direction axiale du second arbre intermédiaire (8), le premier pignon fou de marche avant (15) suit le second pignon mené (9), le deuxième pignon fou de marche avant (17) suit le premier pignon fou de marche avant (15) et le troisième pignon fou de marche avant (18) suit le deuxième pignon fou de marche avant (17).

4. Boîte de vitesses à double embrayage (1) selon la revendication 1,
**caractérisée en ce que**
l'élément de commutation (24) est prévu pour relier au choix le pignon mené plus grand (7) à son arbre intermédiaire (6) ou le pignon fou de marche arrière (25) au pignon mené plus grand (7), lequel est alors désaccouplé de son arbre intermédiaire (6).

5. Boîte de vitesses à double embrayage (1) selon l'une des revendications 1 à 4,
**caractérisée en ce que**
un pignon de verrouillage de stationnement (14) est disposé sur l'arbre intermédiaire (8) avec le pignon mené plus petit (9).

6. Boîte de vitesses hybride (27) comportant une boîte de vitesses à double embrayage selon l'une des revendications 1 à 5 et une machine électrique (28).

7. Boîte de vitesses hybride (27) selon la revendication 6,
**caractérisée en ce que**
la machine électrique (28) est accouplée ou peut être accouplée à l'arbre d'entrée (2) de la boîte de vitesses à double embrayage (1) directement ou par l'intermédiaire d'au moins un élément de transmission.

8. Boîte de vitesses hybride (27) selon la revendication 6,
**caractérisée en ce que**
la machine électrique (28) est accouplée à un pignon fou (7, 15, 17, 18, 20, 23, 25) sur l'un des arbres intermédiaires (6, 8).

9. Boîte de vitesses hybride (27) selon la revendication 6,
**caractérisée en ce que**
la machine électrique (28) est accouplée ou peut être accouplée à l'un des arbres d'entrée de boîte de vitesses partielle (4, 5).

10. Système d'entraînement de véhicule comportant un moteur à combustion interne (32) et deux essieux de véhicule entraînés, dans lequel un premier essieu de véhicule est entraîné par le moteur à combustion interne (32) par l'intermédiaire d'une boîte de vitesses à double embrayage (1) selon l'une des revendications 1 à 5 ou d'une boîte de vitesses hybride (27) selon l'une des revendications 6 à 9, dans lequel le second essieu de véhicule est conçu en tant qu'essieu de véhicule pouvant être entraîné de manière purement électrique.
